# EUROPEAN PATENT SPECIFICATION

(11) **EP 1 107 177 B1**
(45) Date of publication and mention of the grant of the patent: **14.10.2009**
(21) Application number: 00310920.4
(22) Date of filing: 08.12.2000
(51) Int. Cl.: G06T 1/20, G06T 15/40

(54) **Method and apparatus for processing portions of primitives that are being rendered**
Verfahren und Vorrichtung für die Verarbeitung der Teile von Primitiven die dargestellt werden
Procédé et appareil pour traiter des parties de primitifs qui sont rendus

(30) Priority: 09.12.1999 US 457648
(43) Date of publication of application: 13.06.2001
(73) Proprietor: ATI International SRL, Christ Church (BB)
(72) Inventor: Fowler, Mark C., Hopkinton, MA 01748 (US); Morein, Stephen, Cambridge, MA 02139 (US); Skende, Andi, Shrewsbury, MA 01545 (US); Olson, Kevin M., Marlboro, MA 01752 (US)
(74) Representative: Reeve, Anna Elizabeth

(56) References cited:
- WO-A-00/70561
- GB-A- 2 301 513
- US-A- 5 522 018
- US-A- 5 701 405
- US-A- 5 864 342

## Description

The invention relates generally to video graphics processing and more particularly to a method and apparatus for processing portions of primitives that are being rendered.

Computers are used in many applications. As computing systems continue to evolve, the graphical display requirements of the systems become increasingly demanding. This is especially true in the area of three-dimensional (3D) graphics processing. In order to process 3D graphics images, the position of graphics primitives with respect to the display must be understood in all three dimensions. This includes the dimension of depth, often referred to as the Z dimension. The Z dimension describes the positioning of a video graphics primitive with respect to other video graphics primitives within the display frame in terms of depth, or distance from the viewer, of the video graphics primitives.

Computer displays and other high resolution display devices such as high definition televisions (HDTVs), projectors, printers, plotters, and the like, present an image to the viewer as an array of individual picture elements, or pixels. The individual pixels are given a specific colour, which corresponds to the colour of the image at the location of the particular pixel. The pixels are closely spaced, and the viewers visual system performs a filtering of the individual colours to form a composite image. If the partitioning of the image into individual pixel elements is performed properly, and the pixels are close enough together, the viewer perceives the displayed array of pixels as a virtually continuous image.

In order to present a smooth and continuous image on the display, the processing entity processing the video graphics images must maintain a high rate of pixel processing. In many cases, graphics primitives that are received for rendering are often inconsequential as they are positioned behind other primitives or objects already drawn with respect to the display frame. In other words, the information contained within the graphics primitive is completely covered up from a viewer's perspective by other graphics primitives as the Z dimension of the newly received primitive positions it behind those primitives already drawn. As such, the processing operations required for processing such inconsequential primitives may be unnecessary.

In some prior art systems, a number of hierarchical sets of Z values are stored for a display frame. For example, the rear most Z value for each half of the display may be stored in one set, the rear most value for each quarter in the next hierarchical set, the rear most value for each eighth in the next, etc. As such, primitives can be compared with successive hierarchical layers to determine if the primitive needs to be rendered. In such prior art systems, the front most portion of the primitive in question is compared with the rear most portion of each relevant hierarchical layer. If the primitive is determined to lie behind other primitives based on the hierarchical layer comparisons, the entire primitive may be discarded. If any portion of the primitive is determined to lie in a potentially visible position, the entire primitive is rendered. The full set of hierarchical layers, which may be stored as an octal tree, requires a large amount of overhead, and recomputation of the hierarchical layers after each primitive rendering operation requires additional processing bandwidth. In addition, by rendering or discarding entire primitives based on the comparison with the current state of the frame, if only a small portion of the primitive is potentially visible and therefore needs to be processed, processing of the remaining portions that are not potentially visible consumes processing resources unnecessarily.

GB-A-2301513 of Namco Ltd discloses an apparatus and method for image synthesizing. A drawing process is carried out using a Z main buffer that stores depth information, which represents a distance from a visual point in such a manner that it corresponds to individual pixels on a display screen. The Z main buffer is divided into a number of blocks each including a number of pixels. The minimum and maximum Z values of the depth information on the pixels in each block is stored in their corresponding locations in a ZR buffer. The minimum and maximum values of the depth information on a polygon are expressed by Z min and Z max respectively. When Z min is greater than or equal to Z max, a process for referring to the depth information stored in the Z main buffer and a drawing process for the polygon are omitted and when Zmax is less than or equal to Zmin a drawing process for the polygon is carried out without referring to the depth information stored in the Z main buffer.

US-A-5864342 discloses a method for rendering graphical objects in a scene to generate a display of images including dividing the geometric primitives of models in a scene among portions or chunks of the view space to which the primitives will be rendered and then rendering geometry reference to the chunks in series in a common depth buffer. Pixel fragments can be resolved in a post processing step for one chunk while primitives for another chunk are rasterised.

Therefore, a need exists for a method and apparatus that allows primitives to be processed in a more efficient manner that avoids at least some unnecessary processing of non-visible primitive portions without the need for storing hierarchical sets of Z values.

According to a first aspect of the present invention, a method for processing primitives corresponding to a frame comprises:
separating each primitive into a plurality of portions, wherein each portion of the plurality of portions corresponds to a pixel block of a plurality of pixel blocks, wherein each pixel block of the plurality of pixel blocks includes a portion of a set of pixels that makes up the frame;
determining a representative Z value for each portion of the primitive;
comparing the representative Z value for each portion with a representative buffered Z value corresponding to the portion;
when the representative Z value for the portion compares favorably with the representative buffered Z value, discarding the portion; and
when the representative Z value for the portion compares unfavorably with the representative buffered Z value, processing the portion of the primitive.

According to a second aspect of the present invention, a video graphics processor comprises:
a Z mask memory that stores representative buffered Z values for a plurality of pixel blocks that are included in a frame;
a Z comparison block operably coupled to the Z mask memory, wherein the Z comparison block receives representative Z information for portions of primitives, wherein the Z comparison block compares the representative Z information for each portion with a representative buffered Z value for a corresponding pixel block, wherein the frame is divided into a plurality of pixel blocks and each portion of each primitive corresponds to a pixel block of the plurality of pixel blocks, wherein the Z comparison block provides an indication based on comparing the representative Z information for each portion with the representative buffered Z value for each corresponding pixel block;
a raster engine operably coupled to the Z comparison block and operably coupled to receive primitive parameters of primitives, wherein the raster engine processes each primitive in portions, wherein the raster engine determines the representative Z information for each portion and provides the representative Z information for each portion to the Z comparison block, wherein when the Z comparison block indicates a favorable comparison for a portion, the raster engine discards the portion, wherein when the Z comparison block indicates an unfavorable comparison for the portion, the raster engine generates pixel fragments from the primitive parameters for the portion; and
a render backend block operably coupled to the raster engine, wherein the render backend block blends the pixel fragments received from the raster engine with stored pixel data, wherein the stored pixel data includes stored colour data and stored Z data.

According to a third aspect of the present invention there is provided a computer program product comprising program code stored in memory and when executed on a processing module enables the processing module to carry out the following steps:
separating each primitive into a plurality of portions, wherein each portion of the plurality of portions corresponds to a pixel block of a plurality of pixel blocks, wherein each pixel block of the plurality of pixel blocks includes a portion of a set of pixels that makes up the frame;
determining a representative Z value for each portion of the primitive;
comparing the representative Z value for each portion with a representative buffered Z value corresponding to the portion, wherein the representative buffered Z value is retrieved from a Z mask memory;
when the representative Z value for the portion compares favorably with the representative buffered Z value, discarding the portion; and
when the representative Z value for the portion compares unfavorably with the representative buffered Z value, processing the portion of the primitive.

The present invention will be described, by way of example, with reference to the accompanying drawings, in which:
Figure 1 illustrates a block diagram of a video graphics processing circuit in accordance with a particular embodiment of the present invention;
Figure 2 is a graphical representation of primitive as it relates to a plurality of pixel blocks in a display frame;
Figure 3 illustrates an alternate graphical representation of a primitive as it relates to a plurality of pixel blocks included in a display frame;
Figure 4 illustrates a block diagram of a video graphics processor in accordance with a particular embodiment of the present invention; and
Figure 5 illustrates a flow diagram of a method for processing primitives corresponding to a frame in accordance with a particular embodiment of the present invention.

Generally, the present invention provides a method and apparatus for processing portions of primitives that are being rendered. Primitives, which may also be referred to as object elements, that are received are divided into portions that correspond to pixel blocks of the frame. The frame includes a plurality of pixel blocks where each of the pixel blocks includes a plurality of pixels that are included in the frame. Thus, the pixel blocks divide the frame into a number of smaller blocks. A representative Z value for each portion of the primitive is determined, and the representative Z value for the portion of the primitive is compared with a representative buffered Z, which may be the representative buffer Z value for the pixel block to which the portion corresponds. If the representative Z value for the portion compares favorably with the representative buffered Z value such that the portion is determined to lie completely behind the information currently stored for that pixel block, the portion is discarded. If the representative Z value for the portion compares with the representative buffer Z value in such a way that not all of the portion is ensured of being positioned behind currently buffered data for the pixel block, the portion of the primitive is processed further such that pixel fragments corresponding to the portion are generated and combined with the information currently stored for that pixel block. The representative buffered Z values for each of the pixel blocks may be derived based on a compression scheme applied to the Z values for each of the individual pixel blocks. As such, generation of the representative buffer Z values can be performed with minimal additional overhead.

By allowing portions of graphics primitives to be processed individually and discarded when determined to be irrelevant, the processing of numerous unnecessary video graphics primitive portions can be avoided. As such, the processing bandwidth available for performing relevant processing operations is increased, thus improving overall system performance. When utilized in a system that also includes Z compression on a pixel block basis, the additional overhead associated with storing representative buffer Z values for each of the pixel blocks within the display frame is reduced.

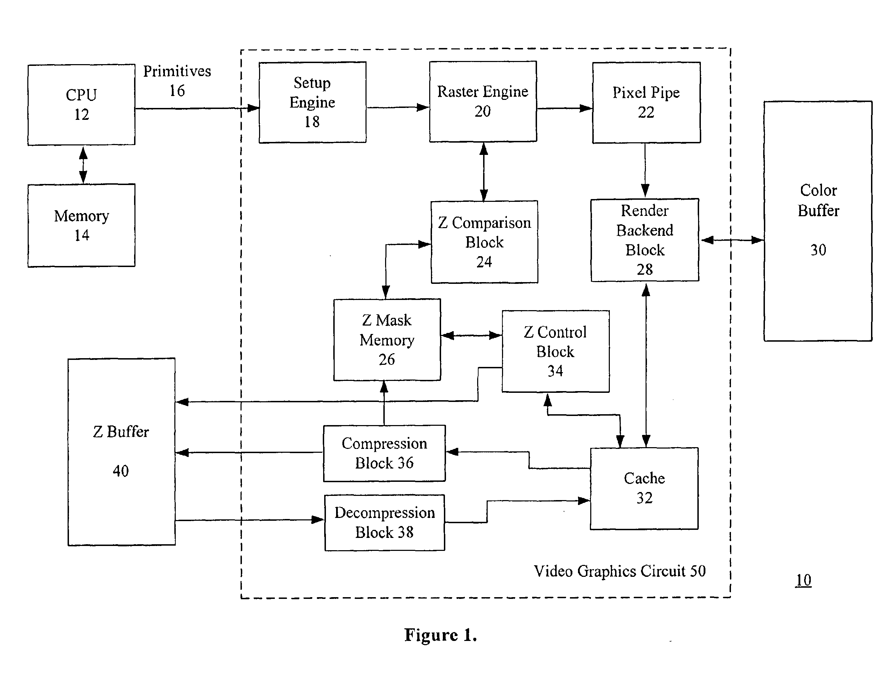

The invention can be better understood with reference to Figures 1-5. Figure 1 illustrates a block diagram of a circuit 10 that includes a central processing unit (CPU) 12, system memory 14, a video graphics circuit 50, a colour buffer 30, and a Z buffer 40. The CPU 12 and system memory 14 may be a CPU and system memory as found in a personal computer, workstation, handheld computer, laptop computer, or any similar type of computing device. The Z buffer 40 stores buffered Z data, where the buffered Z data may be in a compressed format as will be described below. The Z buffer stores a buffered Z data value for each pixel in a frame. Similarly, the colour buffer 30 stores a colour value for each pixel within the frame, where the information in the colour buffer may be used to generate a display output for driving a display device to provide images to a viewer.

The video graphics circuit 50 includes a set up engine 18, a raster engine 20, a pixel pipe 22, a render backend block 28, and additional blocks associated with the storage of Z values in a compressed format. Although the specific example described with respect to Figure 1 includes the compression of the Z information to determine representative buffered Z values for pixel blocks in a frame, such representative buffered Z values may be determined without any Z compression occurring. Calculation of the representative buffered Z values for pixel blocks may be performed using a number of techniques that will be readily apparent to one of ordinary skill in the art.

The Z compression circuitry shown to be included in the circuit 10 of Figure 1 may be substantially similar to that described in detail in co-pending European patent application number 00306650.3. The Z compression circuitry is shown to include a cache 32, a Z control block 34, a Z mask memory 26, a compression block 36, a decompression block 38, and the Z buffer 40, which is assumed to store Z data where at least some of the Z data is stored in a compressed format.

As is described in EP 00306650.3, pixels in the display frame are separated into a plurality of pixel blocks where each pixel block includes a plurality of pixels. The Z information corresponding to the plurality of pixels in each pixel block is compressed and stored in the Z buffer 40 in a compressed format when possible. A Z mask value is stored for each pixel block to indicate the level of compression of the Z information for that pixel block in the Z buffer 40. The Z mask value may include a N-bit compression level encoding, where the encoding provides 2^{N} potential levels. The Z mask value in the embodiment shown in Figure 1 also preferably includes the representative buffered Z value for that pixel block such that such a representative buffered Z value can be readily determined by other blocks within the circuit 10.

When Z information for a pixel block is required in an uncompressed format for processing operations, the cache 32 is first examined to determine if the Z information is currently stored in the cache 32. If it is not, the Z mask memory 26 is consulted by the Z control block 34 to determine the level of compression of the Z information for that particular pixel block in the Z buffer 40. Knowing the level of compression enables the Z control block 34 to only fetch the appropriate amount of data required from the Z buffer 40 which is then provided to the decompression block 38 for decompression and storage in the cache 32 for use.

When Z information stored in the cache 32 is flushed and the data in the Z buffer 40 must be updated (i.e. the cache is flushing a modified copy), the compression block 36 attempts to compress the Z data prior to storage in the Z buffer 40. Based on the level of success in compression, the compression block 36 stores the level of compression as part of the Z mask value for that pixel block in the Z mask memory 26. In addition, the compression block 36 determines a representative buffered Z value for the pixel block, which it also includes in the Z mask value stored in the Z mask memory 26 for that pixel block.

Preferably, the representative buffered Z value for each pixel block as determined by the compression block 36 is the rear most Z value of all the pixels within that particular pixel block. As stated earlier, although the benefits of compressing the Z information in a video graphics system compliment the reduction in processing resources required as provided by the individual processing of portions of primitives as described herein, the compression of Z data is not required for determining a representative buffered Z value for a pixel block. In other words, a block other than the compression block 36 may be used to determine the rear most Z value for the pixels included in a pixel block which is then stored in a memory structure as the representative buffered Z value for that particular pixel block.

To briefly summarize the Z compression circuitry, the cache 32 stores uncompressed Z information for use by the render backend block 28 and possibly other blocks included in the system. The Z control block 34, which is operably coupled to the render backend block 28, the cache 32, the Z buffer 40, and the Z mask memory 26 controls caching of buffered Z data for use by the render backend block 28 based on the compression levels as stored in the Z mask memory 26. The decompression block 38, which is operably coupled to the cache 32 and the Z buffer 40, decompresses buffered Z data received from the Z buffer 40 to produce stored Z data in the uncompressed format for storage in the cache. The compression block 36, which is operably coupled to the Z buffer 40, the Z mask memory 26, and the cache 32 compresses stored Z data for pixel blocks received from the cache 32 to produce buffered Z data for storage in the Z buffer 40. Through this compression operation, the compression block 36 determines a compression level and a representative buffered Z value for each pixel block, which the compression block 36 then stores in the Z mask memory 26.

The compression algorithm used by the compression block 36 and also used for decompression by the decompression block 38 may be a compression algorithm as is described in co-pending European patent application number 00307555.3.

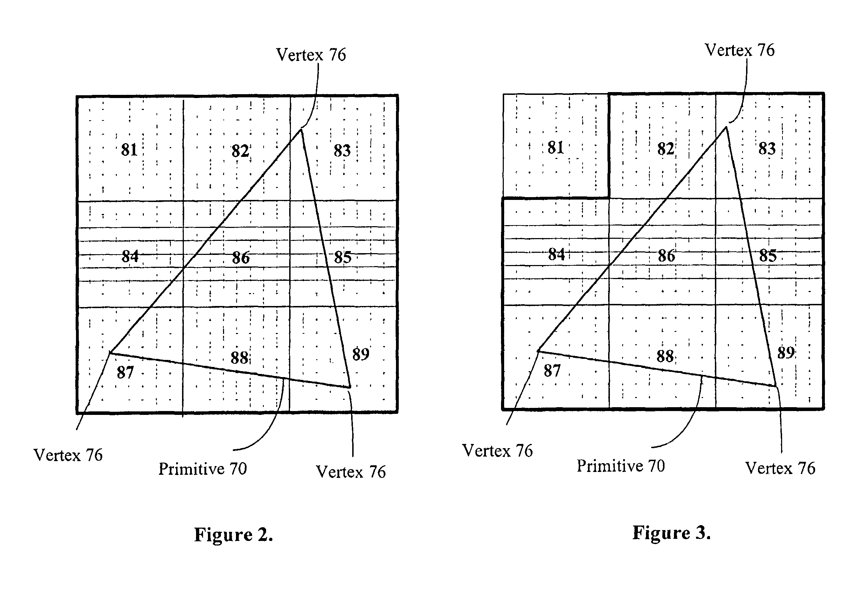

In operation, when the CPU 12, which may be executing software stored in system memory 14, generates video graphics primitives 16 for display, the set up engine 18 produces primitive slope information based on received graphics primitives 16. Preferably, the graphics primitives 16 are triangle primitives that include information regarding the values of various parameters at the vertices of the primitive. Slope information corresponding to the primitives 16 is provided to the raster engine 20, which is operably coupled to the set up engine 18. The raster engine 20 processes the primitives 16 in a manner that, depending on the size of the primitive, may divide each primitive into a number of separate portions. The division or separation is performed such that each of the portions corresponds to a pixel block division within the display frame. For example, if a video graphics primitive covers portions of seven pixel blocks, which is illustrated in Figure 2, the coordinates of the vertices of the primitive will indicate such coverage. Knowing the coordinates corresponding to each of the individual pixel blocks which the display frame has been divided into allows the primitive to be separated into a number of separate portions, where each portion of the primitive corresponds to the portion of the primitive that overlaps a particular pixel block. The raster engine 20 can be designed such that the separate processing of each primitive portion is inherent to the processing technique and therefore is not an additional step that requires complex or bandwidth consuming calculations.

The raster engine 20 utilizes the received primitive slope information, which is included in a number of primitive parameters (object element parameters) corresponding to the primitive, and determines representative Z information for each portion of the primitive. In one embodiment, the representative Z information for each portion of the primitive is the front most Z value for the primitive as a whole. In another embodiment, the front most Z value for each portion may be calculated based on at least a portion of the primitive parameters, or pixel slope information, for the primitive as received from the set up engine 18. The representative Z information for each portion is provided to the Z comparison block 24 that is operably coupled to the raster engine 20 and the Z mask memory 26.

The Z comparison block 24 compares the representative Z information for each portion with a representative buffered Z value for a corresponding pixel block, where the representative buffered Z values are preferably stored in the Z mask memory 26 as described above.

In order to simplify the performance of multiple comparison operations for a particular primitive, the representative buffered Z value for a pixel block may be determined in a coarse manner such that a single representative buffered Z value is used for comparison with all of the portions of a particular primitive. Figure 2 illustrates a coarse technique for determining a representative buffered Z value for a pixel block.

Figure 2 illustrates a primitive 70 that overlays (corresponds to) a number of pixel blocks 82-89. As is illustrated, each of the pixel blocks 81-89 is an 8 pixel-by-8 pixel block that includes 64 pixels. As is apparent to one of ordinary skill in the art, the number of pixels included in a pixel block and the general configuration of the pixel block may vary from one application to the next. Thus, the pixel block need not necessarily by square or rectangular in shape and may contain more or fewer pixels.

The pixel blocks that correspond to the primitive 70 are determined based on the vertices 76 of the primitive 70. The vertices 76 determine the physical coordinates of the primitive 70 within the display frame. In the example illustrated in Figure 2, a set of pixel blocks 81-89 is determined based on the location of the vertices 76. Thus, the left most vertex determines a left most coordinate, the top most vertex determines a top most coordinate, the right most vertex determines a right most coordinate, and a bottom most vertex determines a bottom most coordinate. Based on these four coordinates, a rectangular set of pixel blocks is determined. The representative buffered Z value for all of the pixel blocks included within the selected set of pixel blocks 81-89 is then determined based on the rear most Z value included in any one of those pixel blocks 81-89 included in the set determined by the position of the vertex of 76. Note that this type of a determination corresponds to the example illustrated in Figure 2, and additional techniques are described below.

In another embodiment, only those pixel blocks that correspond to the primitive 70 (i.e. those pixel blocks that include pixels for which information is contained within the primitive 70) are included in the set of pixel blocks used to determine the representative buffered Z value that is to be used for all of the pixel blocks when determining whether or not to further process the various portions of the primitive 70. Figure 3 illustrates such an embodiment in which only those pixel blocks 82-89 that are shown to be overlapped by the primitive 70 are considered relevant. The pixel block 81, which was included in the set of pixel blocks used for determining the representative buffered Z value in Figure 2 is not considered in the representative buffered Z value determination in the embodiment of Figure 3.

In another embodiment, the representative buffered Z value for each pixel block is determined on a pixel block basis for comparison with the representative Z value for each portion of the object element, or primitive. This may be preferred when Z data compression is also included in the system, which is the case for the circuit 10 of Figure 1. In the circuit 10 of Figure 1, the representative buffered Z value for each pixel block is readily determined from the Z mask values stored in the Z mask memory 26. As stated earlier, each Z mask value within the Z mask memory 26 corresponds to a particular pixel block and includes a representative buffered Z value for the pixel block along with the compression level of the Z information for that pixel block.

Based on the comparison between the representative Z information for each portion of the primitive with the representative buffered Z value for the corresponding pixel block, the Z comparison block generates an indication that it provides to the raster engine 20. The indication provided to the raster engine 20 indicates either a favorable or an unfavorable comparison. Preferably, a favorable comparison indicates that the portion of the primitive has been determined to lie completely behind the currently stored information for the pixel block to which the portion corresponds. Thus, performing any additional processing of that portion of the primitive would cause no change to the information stored for the display frame. As such, the additional processing is unnecessary, and the raster engine 20 can discard that portion of the primitive.

In the case where an unfavorable comparison is determined by the comparison block 24, this determination may indicate that, according to the coarse comparison performed, the portion of the primitive is not ensured to lie entirely behind the information stored for that pixel block. As such, processing that portion of the primitive continues.

Thus, the Z comparison block 24 compares the representative Z values of various portions of the primitive with representative buffered Z values stored for the corresponding pixel blocks. In one embodiment, the comparison is based on the front most Z value of the portion of the primitive and the rear most Z value stored for any pixel within the pixel block. Thus, the comparison is a somewhat coarse determination as to whether the portion of the primitive will have any relevance to that particular pixel block. Such a course comparison enables obviously non-visible portions of primitives to be discarded rather than requiring processing resources to be expended unnecessarily.

The continued processing performed by the raster engine 20 for each portion of each primitive includes the generation of pixel fragments from the primitive slope information provided by the set up engine 18. Preferably, each pixel fragment includes a colour value, a set of coordinates indicating a pixel in the display frame to which the fragment corresponds, and a Z value for the fragment. Note that the processing steps performed by the raster engine 20 may be divided such that two different blocks perform different portions of the functions. Thus, one block could determine the representative Z value for various portions, whereas the other block generates pixel fragments for portions that are determined to be relevant based on the Z comparison performed by the Z comparison block 24. This may further improve the efficiency of the system as such operations could be performed in parallel and may be pipelined to improve throughput.

The pixel pipe 22, which is operably coupled to the raster engine 20, performs various operations that may modify the colour of the pixel fragments as received from the raster engine 20. Such operations can include texture mapping operations. The textured fragments resulting from the operations performed by the pixel pipe 22 are then passed to the render backend block 28.

The render backend block 28 blends textured fragments with data for corresponding pixels as stored in the colour buffer 30 and the Z buffer 40. As discussed earlier, the inclusion of the Z compression circuitry is optional, and therefore the render backend block 28 may interact directly with the Z buffer 40 in other implementations. In the embodiment illustrated in Figure 1, the render backend block 28 fetches relevant Z information from the cache 32. The Z value for each textured fragment is used to blend the fragment with the currently stored pixel information. The blending operations performed by the render backend block 28 are well known in the art, and the resulting pixel information produced by the backend block 28 is stored back in the colour buffer 30 and the Z buffer 40 (possibly via the cache 32).

Preferably, the video graphics circuit 50 is implemented as a single integrated circuit. In other embodiments, the Z mask memory 26 may be implemented as an off-chip memory supported by an on-chip cache. In order to reduce the required size of the Z mask memory 26, the representative buffered Z values for the pixel block may be a truncated Z values. Thus, only a most significant portion of the actual Z value may be stored as the representative buffered Z value. Although this increases the coarseness of the comparisons performed by the Z comparison block 24, it can provide some level of relevancy determination with respect to the various portions of primitives.

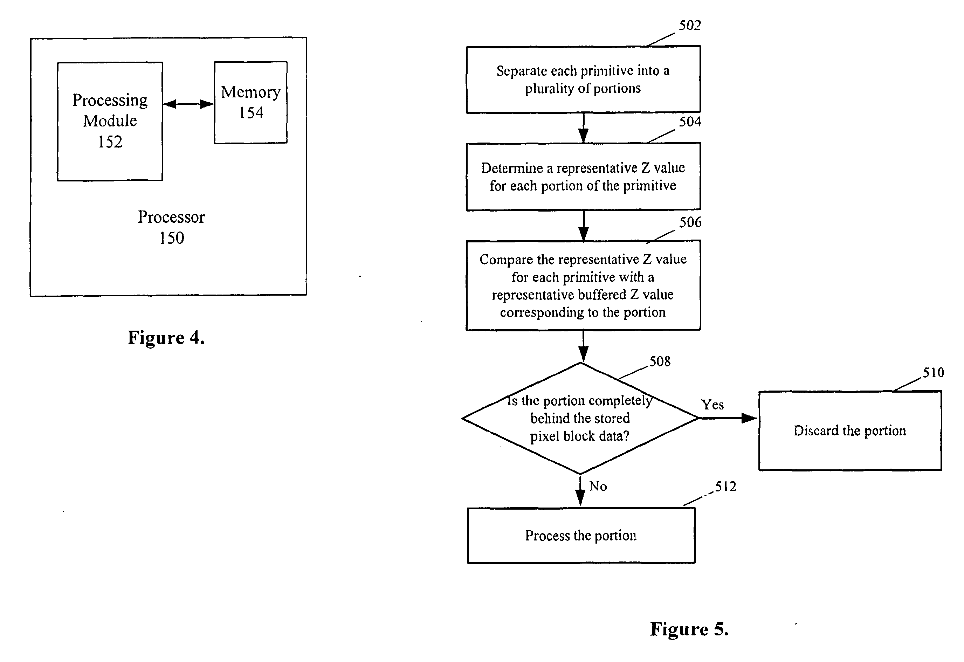

Figure 4 illustrates a video graphics processor 150 that may be used for processing primitives corresponding to a frame in a video graphics circuit. The processor 150 includes a processing module 152 and memory 154. The processing module 152 may include a single processing entity or a plurality of processing entities. Such a processing entity may be microprocessor, microcontroller, digital signal processor, state machine, logic circuitry, or any device that processes information based on operational or programming instructions.

The memory 154 may be a single memory device or a plurality of memory devices. Such a memory device may be a read only memory device, random access memory device, floppy disk, hard drive memory, or any device that stores digital information. Note that when the processing module 152 has one or more of its functions performed by a state machine or logic circuitry, the memory containing the corresponding operational instructions may be embedded within the state machine or logic circuitry.

The memory 154 stores programming or operational instructions that, when executed, allow the processing module 152 to perform at least a portion of the method illustrated in Figure 5. Note that the processor 150 may implement some of the functions of Figure 5 through software stored in the memory 154, whereas other portions may be implemented using hardware, or circuitry included within the processor 150. Thus, in some embodiments, a mix of hardware and software may be used to perform the method illustrated in Figure 5.

Figure 5 illustrates a method for processing primitives corresponding to a frame. The method begins a step 502 where each primitive is separated into a plurality of portions. Each portion of the plurality of portions corresponds to a pixel block of a plurality of pixel blocks where each pixel block includes a portion of a set of pixels that makes up the frame.

At step 504, a representative Z value for each portion of the primitive is determined. In one embodiment, the representative Z value for each portion of the primitive is determined by utilizing a front most Z value of the primitive as the representative Z value for all portions of the primitive. In another embodiment, determining the representative Z value for each portion of the primitive includes calculating a front most Z value for each portion of the primitive. Such calculations may be performed based on the Z values indicated for the vertices of the primitive.

At step 506, the representative Z value for each portion is compared with a representative buffered Z value corresponding to the portion. In one embodiment, the representative buffered Z value corresponding to the portion is a Z value corresponding to a rear most pixel block in a rectangular set of pixel blocks determined by the vertices of the primitive. Such an embodiment was described with respect to Figure 2 above. In another embodiment, the representative buffered Z value is a Z value corresponding to a rear most pixel block in a set of pixel blocks that include pixel blocks that include pixels to which the primitive corresponds. Such an embodiment was described with respect to Figure 3 above.

In other embodiments, the representative buffered Z value for the portion is the representative buffered Z value for the pixel blocks to which the portion corresponds, where the representative buffered Z value is stored in a Z mask memory. Such an embodiment may correspond to that described with respect to Figure 1 above. As such, the Z mask memory may also store a compression level corresponding to the Z information for each pixel block. The representative buffered Z value stored in the Z mask memory may be a truncated Z value in order to reduce the memory required to store the representative buffered Z values for the pixel blocks of the frame.

At step 508 it is determined whether or not the portion of the primitive lies completely behind the image data currently stored for the pixel block to which the portion corresponds. Thus, in one embodiment, if the front most Z value of the portion lies behind the rear most portion of the data currently stored for the pixel block, the processing of that portion of the primitive will have no effect on the pixel data currently stored in that pixel block (i.e. the image presented to the viewer on a display would not be altered). As such, the portion can be discarded at step 510.

However, if the comparison performed at step 506 is determined at step 508 to indicate that there is no assurance that no part of the portion of the primitive will not have some effect on the pixel data stored for the pixel block, the method proceeds to step 512 where processing of the portion continues. As described earlier, processing of the portion may include generating pixel fragments that are then blended with stored data for the pixel block to which the portion of the primitive corresponds. After blending occurs, if the system supports Z compression, compression of the Z value information for the pixel block is then attempted. Such compression may be used to determine a new representative buffered Z value for the pixel block and a new compression level for the pixel block which can then be stored in the Z mask memory.

By enabling object elements, or primitives, to be processed on a portion-by-portion basis, irrelevant portions of the primitives can be discarded based on Z comparisons such that unnecessary processing operations are avoided. By storing a coarse representation of the current state of the Z values within various pixel blocks, the additional overhead associated with performing such coarse comparisons is reduced. This increases the feasibility of including such systems in video graphics processing systems.

## Claims

1. A method for processing primitives corresponding to a frame, comprising:
separating (502) each primitive (70) into a plurality of portions, wherein each portion of the plurality of portions corresponds to a pixel block of a plurality of pixel blocks, wherein each pixel block of the plurality of pixel blocks includes a portion of a set of pixels that makes up the frame;
determining (504) a representative Z value for each portion of the primitive (70);
comparing (506) the representative Z value for each portion with a representative buffered Z value corresponding to the portion wherein the representative buffered Z value is retrieved from a Z mask memory;
when the representative Z value for the portion compares favorably with the representative buffered Z value, discarding (510) the portion; and
when the representative Z value for the portion compares unfavorably with the representative buffered Z value, processing (512) the portion of the primitive.

2. The method of claim 1, wherein determining (504) the representative Z value for each portion of the primitive further comprises utilizing a front most Z value of the primitive as the representative Z value for all portions of the primitive.

3. The method of claim 1, wherein determining (504) the representative Z value for each portion of the primitive further comprises calculating a front most Z value for each portion of the primitive.

4. The method of claim 1, wherein the Z mask memory (26) stores the representative buffered Z value for each pixel block of the frame and also stores a compression level corresponding to Z information for each pixel block.

5. The method of claim 4, wherein processing (512) the portion of the primitive further comprises:
generating pixel fragments for the portion of the primitive;
blending the pixel fragments with stored data for a pixel block to which the portion of the primitive corresponds, wherein blending produces Z value information for the pixel block;
compressing the Z value information such that a new representative buffered Z value and a new compression level for the pixel block are determined; and
storing the new representative buffered Z value and the new compression level in the Z mask memory.

6. The method of claim 1, wherein the representative buffered Z value is a Z value corresponding to a rear most pixel block in a rectangular set of pixel blocks determined by vertices of the primitive.

7. The method of claim 1, wherein the representative buffered Z value is a Z value corresponding to a rear most pixel block in a set of pixel blocks that includes pixel blocks that include pixels to which the primitive corresponds.

8. The method of claim 1, wherein the representative buffered Z value is a rear most Z value in a pixel block that corresponds to the portion.

9. The method of claim 1, wherein the representative buffered Z value is a truncated Z value.

10. A video graphics processor, comprising:
a Z mask memory (26) that stores representative buffered Z values for a plurality of pixel blocks that are included in a frame;
a Z comparison block (24) operably coupled to the Z mask memory (26), wherein the Z comparison block (24) receives representative Z information for portions of primitives (70), wherein the Z comparison block (24) compares the representative Z information for each portion with a representative buffered Z value for a corresponding pixel block, wherein the frame is divided into a plurality of pixel blocks and each portion of each primitive (70) corresponds to a pixel block of the plurality of pixel blocks, wherein the Z comparison block provides an indication based on comparing the representative Z information for each portion with the representative buffered Z value for each corresponding pixel block;
a raster engine (20) operably coupled to the Z comparison block (24) and operably coupled to receive primitive parameters of primitives (70), wherein the raster engine (20) processes each primitive in portions, wherein the raster engine (20) determines the representative Z information for each portion and provides the representative Z information for each portion to the Z comparison block (24), wherein when the Z comparison block (24) indicates a favorable comparison for a portion, the raster engine (20) discards the portion, wherein when the Z comparison block (24) indicates an unfavorable comparison for the portion, the raster engine (20) generates pixel fragments from the primitive parameters for the portion; and
a render backend block (28) operably coupled to the raster engine (20), wherein the render backend block (28) blends the pixel fragments received from the raster engine with stored pixel data, wherein the stored pixel data includes stored colour data and stored Z data.

11. The video graphics processor of claim 10 further comprises:
a colour buffer (30) operably coupled to the render backend block (28), wherein the colour buffer (30) stores the stored colour data;
a cache (32) operably coupled to the render backend block (28), wherein the cache (32) stores at least a portion of the stored Z data in an uncompressed format;
a Z buffer (40) that stores buffered Z data in a compressed format;
a compression block (36) operably coupled to the cache (32), the Z buffer (40), and the Z mask memory (26), wherein the compression block (36) compresses stored Z data for pixel blocks received from the cache to produce buffered Z data for storage in the Z buffer (40), wherein the compression block (36) determines a compression level and the representative buffered Z value for each pixel block,
wherein the Z mask memory (26) stores the compression level and the representative buffered Z value for each pixel block;
a decompression block (38) operably coupled to the cache (32) and the Z buffer 40), wherein the decompression block (38) decompresses buffered Z data received from the Z buffer (40) to produce stored Z data in the uncompressed format for storage in the cache (32); and
a Z control block (34) operably coupled to the cache (32), the Z buffer (40), and the Z mask memory (26), wherein the Z control block (34) controls caching of buffered Z data for use by the render backend block (28) based on the compression levels stored in the Z mask memory (26).

12. The video graphics processor of claim 11, wherein the Z control block, the decompression block (38), the compression block (36), the cache (32), the render backend block (28), the raster engine (20), the Z comparison block (24), and the Z mask memory (26) are included in an integrated circuit.

13. The video graphics processor of claim 12 further comprises a setup engine (18) operably coupled to the raster engine (20), wherein the setup engine (18) receives the primitives (70) and generates the primitive parameters provided to the raster engine (20) from the primitives.

14. The video graphics processor of claim 12, wherein the representative buffered Z value for the corresponding pixel block is a Z value corresponding to a rear most pixel block in a rectangular set of pixel blocks determined by vertices of the primitive.

15. The video graphics processor of claim 12, wherein the representative buffered Z value for the corresponding pixel block is a Z value corresponding to a rear most pixel block in a set of pixel blocks that includes pixel blocks that include pixels to which the primitive corresponds.

16. The video graphics processor of claim 12, wherein the representative buffered Z value for the corresponding pixel block is a rear most Z value for the corresponding pixel block.

17. The video graphics processor of claim 12, wherein the representative Z value for each portion is a front most Z value for the primitive that includes the portion.

18. The video graphics processor of claim 12, wherein the representative Z value for each portion is a front most Z value for the portion as calculated based on at least a portion of the primitive parameters for the primitive that includes the portion.

19. A computer program product comprising program code stored in memory (154) and when executed on a processing module (152) enables the processing module (152) to carry out the following steps:
separating (502) each primitive (70) into a plurality of portions, wherein each portion of the plurality of portions corresponds to a pixel block of a plurality of pixel blocks, wherein each pixel block of the plurality of pixel blocks includes a portion of a set of pixels that makes up the frame;
determining (504) a representative Z value for each portion of the primitive (70);
comparing (506) the representative Z value for each portion with a representative buffered Z value corresponding to the portion, wherein the representative buffered Z value is retrieved from a Z mask memory (26);
when the representative Z value for the portion compares favorably with the representative buffered Z value, discarding (510) the portion; and
when the representative Z value for the portion compares unfavorably with the representative buffered Z value, processing (512) the portion of the primitive.

20. The computer program product of claim 19, wherein the memory (154) includes operating instructions such that the processing module (152) determines the representative Z value for each portion of the primitive by utilizing a front most Z value of the primitive as the representative Z value for all portions of the primitive.

21. The computer program product of claim 19, wherein the memory (154) includes operating instructions such that the processing module determines the representative Z value for each portion of the primitive by calculating a front most Z value for each portion of the primitive.

22. The computer program product of claim 19, wherein the Z mask memory stores the representative buffered Z value for each pixel block of the frame and also stores a compression level corresponding to Z information for each pixel block.

23. The computer program product of claim 22, wherein the memory (154) includes operating instructions such that the processing module (152) processes the portion of the primitive such that the processing includes:
generating pixel fragments for the portion of the primitive;
blending the pixel fragments with stored data for a pixel block to which the portion of the primitive corresponds, wherein blending produces Z value information for the pixel block;
compressing the Z value information such that a new representative buffered Z value and a new compression level for the pixel block are determined; and
storing the new representative buffered Z value and the new compression level in the Z mask memory.

24. The computer program product of claim 19, wherein the representative buffered Z value is a Z value corresponding to a rear most pixel block in a rectangular set of pixel blocks determined by vertices (76) of the primitive (70).

25. The computer program product of claim 19, wherein the representative buffered Z value is a Z value corresponding to a rear most pixel block in a set of pixel blocks that includes pixel blocks that include pixels to which the primitive corresponds.

26. The computer program product of claim 19, wherein the representative buffered Z value is a rear most Z value in a pixel block that corresponds to the portion.

## Patentansprüche

1. Verfahren zur Verarbeitung von Grundelementen, die einem Einzelbild entsprechen, umfassend;
Aufteilen (502) jedes Grundelements (70) in eine Vielzahl von Teilen, wobei jeder Teil aus der Vielzahl von Teilen einem Pixelblock aus einer Vielzahl von Pixelblöcken entspricht, wobei jeder Pixelblock aus der Vielzahl von Pixelblöcken einen Teil eines Satzes von Pixeln enthält, der das Einzelbild bildet;
Bestimmen (504) eines repräsentativen Z-Wertes für jeden Teil des Grundelements (70);
Vergleichen (506) des repräsentativen Z-Wertes für jeden Teil mit einem gepufferten repräsentativen Z-Wert, der dem Teil entspricht, wobei der gepufferte repräsentative Z-Wert aus einem Z-Maskenspeicher abgerufen wird;
wenn der repräsentative Z-Wert für den Teil in dem Vergleich mit dem gepufferten repräsentativen Z-Wert besser abschneidet, Verwerfen (510) des Teils; und
wenn der repräsentative Z-Wert für den Teil in dem Vergleich mit dem gepufferten repräsentativen Z-Wert schlechter abschneidet, Verarbeiten (512) des Teils des Grundelements.

2. Verfahren nach Anspruch 1, wobei das Bestimmen (504) des repräsentativen Z-Wertes für jeden Teil des Grundelements ferner umfasst: Nutzen eines vordersten Z-Wertes des Grundelements als den repräsentativen Z-Wert für alle Teile des Grundelements.

3. Verfahren nach Anspruch 1, wobei das Bestimmen (504) des repräsentativen Z-Wertes für jeden Teil des Grundelements ferner umfasst: Berechnen eines vordersten Z-Wertes für jeden Teil des Grundelements.

4. Verfahren nach Anspruch 1, wobei der Z-Maskenspeicher (26) den gepufferten repräsentativen Z-Wert für jeden Pixelblock des Einzelbildes speichert und auch einen Kompressionsgrad speichert, der der Z-Information für jeden Pixelblock entspricht.

5. Verfahren nach Anspruch 4, wobei das Verarbeiten (512) des Teils des Grundelements ferner umfasst:
Erzeugen von Pixelfragmenten für den Teil des Grundelements;
Mischen der Pixelfragmente mit gespeicherten Daten für einen Pixelblock, dem der Teil des Grundelements entspricht, wobei das Mischen eine Z-Wert-Information für den Pixelblock erzeugt;
Komprimieren der 2-Wext-Information, so dass ein neuer gepufferter repräsentativer Z-Wert und ein neuer Kompressionsgrad für den Pixelblock bestimmt werden; und
Speichern des neuen gepufferten repräsentativen Z-Wertes und des neuen Kompressionsgrades in dem Z-Maskenspeicher.

6. Verfahren nach Anspruch 1, wobei der gepufferte repräsentative Z-Wert ein Z-Wert ist, der einem hintersten Pixelblock in einem rechteckigen Satz von Pixelblöcken entspricht, der durch Eckpunkte des Grundelements bestimmt ist.

7. Verfahren nach Anspruch 1, wobei der gepufferte repräsentative Z-Wert ein Z-Wert ist, der einem hintersten Pixelblock in einem Satz von Pixelblöcken entspricht, der Pixelblöcke enthält, die Pixel enthalten, denen das Grundelement entspricht.

8. Verfahren nach Anspruch 1, wobei der gepufferte repräsentative Z-Wert ein hinterster Z-Wert in einem Pixelblock ist, der dem Teil entspricht.

9. Verfahren nach Anspruch 1, wobei der gepufferte repräsentative Z-Wert ein verkürzter Z-Wert ist.

10. Videografikprozessor, umfassend:
einen Z-Maskenspeicher (26), der gepufferte repräsentative Z-Werte für eine Vielzahl von Pixelblöcken speichert, die in einem Einzelbild enthalten sind;
einen Z-Vergleichsblock (24), der mit dem Z-Maskenspeicher (26) betriebsfähig gekoppelt ist, wobei der Z-Vergleichsblock (24) repräsentative Z-Information für Teile von Grundelementen (70) empfängt, wobei der Z-Vergleichsblock (24) die repräsentative Z-Information für jeden Teil mit einem gepufferten repräsentativen Z-Wert für einen entsprechenden Pixelblock vergleicht, wobei das Einzelbild in eine Vielzahl von Pixelblöcken geteilt ist und jeder Teil jedes Grundelements (70) einem Pixelblock aus der Vielzahl von Pixelblöcken entspricht, wobei der Z-Vergleichsblock eine Meldung auf der Grundlage des Vergleichs der repräsentativen Z-Information für jeden Teil mit dem repräsentativen gepufferten Z-Wert für jeden entsprechenden Pixelblock macht;
eine Rastermaschine (20), die mit dem Z-Vergleichsblock (24) betriebsfähig gekoppelt und betriebsfähig gekoppelt ist, um Grundelementparameter von Grundelemente (70) zu empfangen, wobei die Rastermaschine (20) jedes Grundelement in Teilen verarbeitet, wobei die Rastermaschine (20) die repräsentative Z-Information für jeden Teil bestimmt und die repräsentative Z-Informativn für jeden Teil an den Z-Vergleichsblock (24) übergibt, wobei, wenn der Z-Vergleichsblock (24) ein gutes Abschneiden in dem Vergleich für einen Teil meldet, die Rastermaschine (20) den Teil verwirft, wobei, wenn der Z-Vergleichsblock (24) ein schlechtes Abschneiden in dem Vergleich für den Teil meldet, die Rastermaschine (20) Pixelfragmente aus den Grundelementparametern für den Teil erzeugt; und
einen Bildgestaltungsunterstützungsblock (28), der mit der Rastermaschine (20) betriebsfähig gekoppelt ist, wobei der Bildgestaltungsunterstützungsblock (28) die Pixelfragmente, die von der Rastermaschine kommend empfangen werden, mit gespeicherten Pixeldaten mischt, wobei die gespeicherten Pixeldaten gespeicherte Farbdaten und gespeicherte Z-Daten einschießen.

11. Videografikprozessor nach Anspruch 10, ferner umfassend:
einen Farbpuffer (30), der mit dem Bildgestaltungsunterstützungsblock (28) betriebsfähig gekoppelt ist, wobei der Farbpuffer (30) die gespeicherten Farbdaten speichert;
einen Cachespeicher (32), der mit dem Bildgestaltungsunterstutzungsblock (28) betriebsfähig gekoppelt ist, wobei der Cachespeicher (32) zumindest einen Teil der gespeicherten Z-Daten in einem nicht komprimierten Format speichert;
einen Z-Puffer (40), der gepufferte Z-Daten in einem komprimierten Format speichert;
einen Kompressionsblock (36), der mit dem Cachespeicher (32), dem Z-Puffer (40) und dem Z-Maskenspeicher (26) betriebsfähig gekoppelt ist, wobei der Kompressionsblock (36) gespeicherte Z-Daten für Pixelblöcke, die von dem Cachespeicher kommend empfangen werden, komprimiert, um gepufferte Z-Daten zur Speicherung im Z-Puffer (40) zu erzeugen, wobei der Kompressionsblock (36) einen Kompressionsgrad und den gepufferten repräsentativen Z-Wert für jeden Pixelblock bestimmt,
wobei der Z-Maskenspeicher (26) den Kompressionsgrad und den gepufferten repräsentativen Z-Wert für jeden Pixelblock speichert;
einen Dekompressionsblock (38), der mit dem Cachespeicher (32) und dem Z-Puffer (40) betriebsfähig gekoppelt ist, wobei der Dekompressionsblock (38) gepufferte Z-Daten, die vom Z-Puffer (40) kommend empfangen werden, dekomprimiert, um gespeicherte Z-Daten in dem nicht komprimierten Format zur Speicherung in dem Cachespeicher (32) zu erzeugen; und
einen Z-Steuerblock (34), der mit dem Cachespeicher (32), dem Z-Puffer (40) und dem Z-Maskenspeicher (26) betriebsfähig gekoppelt ist, wobei der Z-Steuerblock (34) die Cachespeicherung von gepufferten Z-Daten zur Verwendung durch den Bildgestaltungsunterstützungsblock (28) auf der Grundlage der Kompressionsgrade steuert, die im Z-Maskenspeicher (26) gespeichert sind.

12. Videografikprozessor nach Anspruch 1 wobei der Z-Steuerblock, der Dekompressionsblock (38), der Kompressionsblock (36), der Cachespeicher (32), der Bildgestaltutigsunterstützungsblock (28), die Rastermaschine (20), der Z-Vergleichsblock (24) und der Z-Maskenspeicher (26) in einer integrierten Schaltung enthalten sind.

13. Videografikprozessor nach Anspruch 12, ferner umfassend eine Vorbereitungsmaschine (18), die mit der Rastermaschine (20) betriebsfähig gekoppelt ist, wobei die Vorbareitungsmaschine (18) die Grundelemente (70) empfängt und die Grundelementparameter, die an die Rastermaschine (20) übergeben werden, aus den Grundelementen erzeugt.

14. Videografikprozessor nach Anspruch 12, wobei der gepufferten repräsentative Z-Wert für den entsprechenden Pixelblock ein Z-Wert ist, der einem hintersten Pixelblock in einem rechteckigen Satz von Pixelblöcken entspricht, der durch Eckpunkte der Grundelemente bestimmt ist.

15. Videografikprozessor nach Anspruch 12, wobei der gepufferte repräsentative Z-Wert für den entsprechenden Pixelblock ein Z-Wert ist, der einem hintersten Pixelblock in einem Satz von Pixelblöcken entspricht, der Pixelblöcke enthält, die Pixel enthalten, denen das Grundelement entspricht.

16. Videografikprozessor nach Anspruch 12, wobei der gepufferte repräsentative Z-Wert für den entsprechenden Pixelblock ein hinterster Z-Wert für den entsprechenden Pixelblock ist.

17. Videografikprozessor nach Anspruch 12, wobei der repräsentative Z-Wert für jeden Teil ein vorderster Z-Wert für das Grundelement ist, das den Teil enthält.

18. Videografikprozessor nach Anspruch 12, wobei der repräsentative Z-Wert für jeden Teil ein vorderster Z-Wert für den Teil ist, wie auf der Grundlage zumindest eines Teils der Grundelementparameter für das Grundelement berechnet, das den Teil enthält.

19. Computerprogrammerzeugnis, umfassend Programmcode, der im Speicher (154) gespeichert ist, und wenn er auf einem Verarbeitungsmodul (152) ausgeführt wird, ermöglicht, dass das Verarbeitungsmodul (152) die folgenden Schritte durchführt:
Aufteilen (502) jedes Grundelements (70) in eine Vielzahl von Teilen, wobei jeder Teil aus der Vielzahl von Teilen einem Pixelblock aus einer Vielzahl von Pixelblöcken entspricht, wobei jeder Pixelblock aus der Vielzahl von Pixelblöcken einen Teil eines Satzes von Pixeln enthält, der das Einzelbild bildet;
Bestimmen (504) eines repräsentativen Z-Wertes füt jeden Teil des Grundelements (70);
Vergleichen (506) des repräsentativen Z-Wertes für jeden Teil mit einem gepufferten repräsentativen Z-Wezt, der dem Teil entspricht, wobei der gepufferte repräsentative Z-Wert aus einem Z-Maskenspeicher (26) abgerufen wird;
wenn der repräsentativen Z-Wert für den Teil in dem Vergleich mit dem gepufferten repräsentativen Z-Wert besser abschneidet, Verwerfen (510) des Teils; und
wenn der repräsentative Z-Wert für den Teil in dem Vergleich mit dem gepufferten repräsentativen Z-Wert schlechter abschneidet, Verarbeiten (512) des Teils des Grundelements.

20. Computerprogrammerzeuguis nach Anspruch 19, wobei der Speicher (154) solche Arbeitsanweisungen enthält, dass das Verarbeitungsmodul (152) den repräsentativen Z-Wert für jeden Teil des Grundelements **dadurch** bestimmt, dass der vorderste Z-Wert des Grundelements als der repräsentative Z-Wert für alle Teile des Grundelements genutzt wird.

21. Computerprograrmnerzeugnis nach Anspruch 19, wobei der Speicher (154) solche Arbeitsanweisungen enthält, dass das Verarbeitungsmodul den repräsentativen Z-Wert für jeden Teil des Grundelements **dadurch** bestimmt, dass ein vorderster Z-Wert für jeden Teil des Grundelements berechnet wird.

22. Computerprogrammerzeugms nach Anspruch 19, wobei der Z-Maskenspeicher den gepufferten repräsentativen Z-Wert für jeden Pixelblock des Einzelbildes speichert und auch einen Kompressionsgrad speichert, der der Z-Information für jeden Pixelblock entspricht.

23. Computerprogrammerzeugnis nach Anspruch 22, wobei der Speicher (154) solche Arbeitsanweisungen enthält, dass das Verarbeitungsmodul (152) den Teil des Grundelements so verarbeitet, dass die Verarbeitung einschließt:
Erzeugen von Pixelfragmenten für den Teil des Grundelements;
Mischen der Pixelfragmente mit gespeicherten Daten für einen Pixelblock, dem der Teil des Grundelements entspricht, wobei das Mischen Z-Wert-Information für den Pixelblock erzeugt;
Komprimieren der Z-Wert-Information, so dass ein neuer gepufferter repräsentativer Z-Wert und ein neuer Kompressionsgrad für den Pixelblock bestimmt werden; und
Speichern des neuen gepufferten repräsentativen Z-Wertes und des neuen Kompressionsgrades in dem Z-Maskenspeicher.

24. Computerprogrammerzeugnis nach Anspruch 19, wobei der gepufferte repräsentative Z-Wert ein Z-Wert ist, der einem hintersten Pixelblock in einem rechteckigen Satz von Pixelblöcken entspricht, der durch Eckpunkte (76) des Grundelements (70) bestimmt ist.

25. Computerprogrammerzeugnis nach Anspruch 19, wobei der gepufferte repräsentative Z-Wert ein Z-Wert ist, der dem hintersten Pixelblock in einem Satz von Pixelblöcken entspricht, der Pixelblöcke enthält, die Pixel enthalten, denen das Grundelement entspricht.

26. Computerprogrammerzeugnis nach Anspruch 19, wobei der gepufferte repräsentative Z-Wert ein hinterster Z-Wert in einem Pixelblock ist, der dem Teil entspricht.

## Revendications

1. Procédé de traitement de primitives correspondant à une trame, comprenant :
la séparation (502) de chaque primitive (70) en une pluralité de parties, où chaque partie de la pluralité de parties correspond à un bloc de pixels d'une pluralité de blocs de pixels, où chaque bloc de pixels de la pluralité de blocs de pixels comprend une partie d'un ensemble de pixels qui constitue la tramé
la détermination (504) d'une valeur Z représentative pour chaque partie de la primitive (70) ;
la comparaison (506) de la valeur Z représentative pour chaque partie avec une valeur Z en mémoire tampon représentative correspondant à la partie où la valeur Z en mémoire tampon représentative est récupérée d'une mémoire de masque Z ;
lorsque la valeur Z représentative pour la partie se compare favorablement à la valeur Z en mémoire tampon représentative, l'abandon (510) de la partie; et
lorsque la valeur Z représentative pour la partie se compare de manière non favorable à la valeur Z en mémoire tampon représentative, le traitement (512) de la partie de la primitive.

2. Procédé selon la revendication 1, dans lequel la détermination (504) de la valeur Z représentative pour chaque partie de la primitive comprend en outre l'utilisation d'une valeur Z la plus en avant de la primitive comme valeur Z représentative pour toutes les parties de la primitive.

3. Procédé selon la revendication 1, dans lequel la détermination (504) de la valeur Z représentative pour chaque partie de la primitive comprend en outre le calcul d'une valeur Z la plus en avant pour chaque partie de la primitive.

4. Procédé selon la revendication 1, dans lequel la mémoire de masque Z (26) stocke la valeur Z en mémoire tampon représentative pour chaque bloc de pixels de la trame et stocke également un niveau de compression correspondant à des informations Z pour chaque bloc de pixels.

5. Procédé selon la revendication 4, dans lequel le traitement (512) de la partie de la primitive comprend en outre :
la génération de fragments de pixels pour la partie de la primitive ;
le mélange des fragments de pixels avec des données stockées pour un bloc de pixels auquel correspond la partie de la primitive, où le mélange produit des informations de valeur Z pour le bloc de pixels ;
la compression des informations de valeur Z de telle sorte qu'une nouvelle valeur Z en mémoire tampon représentative et un nouveau niveau de compression dans le bloc de pixels soient déterminés ; et
le stockage de la nouvelle valeur Z en mémoire tampon représentative et du nouveau niveau de compression dans la mémoire de masque Z.

6. Procédé selon la revendication 1, dans lequel la valeur Z en mémoire tampon représentative est une valeur Z correspondant à un bloc de pixels le plus en arrière dans un ensemble rectangulaire de blocs de pixels déterminé par des sommets de la primitive.

7. Procédé selon la revendication 1, dans lequel la valeur Z en mémoire tampon représentative est une valeur Z correspondant à un bloc de pixels le plus en arrière dans un ensemble de blocs de pixels qui comprend des blocs de pixels qui comprennent des pixels auxquels correspond la primitive.

8. Procédé selon la revendication 1, dans lequel la valeur Z en mémoire tampon représentative est une valeur Z la plus en arrière dans un bloc de pixels qui correspond à la partie.

9. Procédé selon la revendication 1, dans lequel la valeur Z en mémoire tampon représentative est une valeur Z tronquée.

10. Processeur idéographique, comprenant :
une mémoire de masque Z (26) qui stocke des valeurs Z en mémoire tampon représentatives pour une pluralité de blocs de pixels qui sont inclus dans une trame ;
un bloc de comparaison Z (24) couplé de manière fonctionnelle à la mémoire de masque Z (26), où le bloc de comparaison Z (24) reçoit des informations Z représentatives pour des parties de primitives (70), où le bloc de comparaison Z (24) compare les informations Z représentatives pour chaque partie à une valeur Z en mémoire tampon représentative pour un bloc de pixels correspondant, où la trame est divisée en une pluralité de blocs de pixels et chaque partie de chaque primitive (70) correspond à un bloc de pixels de la pluralité de blocs de pixels, où le bloc de comparaison Z fournit une indication basée sur la comparaison des informations Z représentatives pour chaque partie avec la valeur Z en mémoire tampon représentative pour chaque bloc de pixels correspondant ;
un moteur de trame (20) couplé de manière fonctionnelle au bloc de comparaison Z (24) et couplé de manière fonctionnelle pour recevoir des paramètres de primitives (70), où le moteur de trame (20) traite chaque primitive en parties, où le moteur de trame (20) détermine les informations Z représentatives pour chaque partie et fournit les informations Z représentatives pour chaque partie au bloc de comparaison Z (24), où lorsque le bloc de comparaison Z (24) indique une comparaison favorable pour une partie, le moteur de trame (20) abandonne la partie, où lorsque le bloc de comparaison Z (24) indique une comparaison non favorable pour la partie, le moteur de trame (20) génère des fragments de pixels à partir des paramètres de primitives pour la partie ; et
un bloc principal de rendu (28) couplé de manière fonctionnelle au moteur de trame (20), où le bloc principal de rendu (28) mélange les fragments de pixels reçus du moteur de trame avec des données de pixels stockées, où les données de pixels stockées comprennent des données de couleur stockées et des données Z stockées.

11. Processeur vidéograpbique selon la revendication 10, comprenant en outre :
une mémoire couleur (30) couplée de manière fonctionnelle au bloc principal de rendu (28), où la mémoire couleur (30) stocke les données de couleur stockées ;
une mémoire cache (32) couplée de manière fonctionnelle au bloc principal de rendu (28), où la mémoire cache (32) stocke au moins une partie des données Z stockées dans un format non comprimé ;
une mémoire tampon Z (40) qui stocke des données Z en mémoire tampon dans un format comprimé ;
un bloc de compression (36) couplé de manière fonctionnelle à la mémoire cache (32), à la mémoire tampon Z (40) et à la mémoire de masque Z (26), où le bloc de compression (36) comprime des données Z stockées pour des blocs de pixels reçus de la mémoire cache pour produire des données Z en mémoire tampon pour stockage dans la mémoire tampon Z (40), où le bloc de compression (36) détermine un niveau de compression et la valeur Z en mémoire tampon représentative pour chaque bloc de pixels,
où la mémoire de masque Z (26) stocke le niveau de compression et la valeur Z en mémoire tampon représentative pour chaque bloc de pixels ;
un bloc de décompression (38) couplé de manière fonctionnelle à la mémoire cache (32) et à la mémoire tampon Z (40), où le bloc de décompression (38) décompresse des données Z en mémoire tampon reçues de la mémoire tampon Z (40) pour produire des données Z stockées dans le format non comprimé pour stockage dans la mémoire cache (32) ; et
un bloc de commande Z (34) couplé de manière fonctionnelle à la mémoire cache (32), à la mémoire tampon Z (40) et à la mémoire de masque Z (26), où le bloc de commande Z (34) commande la mise en mémoire cache des données Z en mémoire tampon pour une utilisation par le bloc principal de rendu (28) en fonction des niveaux de compression stockés dans la mémoire de masque Z (26).

12. Processeur vidéographique selon la revendication 11, dans lequel le bloc de commande Z, le bloc de décompression (38), le bloc de compression (36), la mémoire cache (32), le bloc principal de rendu (28), le moteur de trame (20), le bloc de comparaison Z (24) et la mémoire de masque Z (26) sont inclus dans un circuit intégré.

13. Processeur vidéographique selon la revendication 12, comprenant en outre un moteur de configuration (18) couplé de manière fonctionnelle au moteur de trame (20), dans lequel le moteur de configuration (18) reçoit les primitives (70) et génère les paramètres de primitives fournis au moteur de trame (20) à partir des primitives.

14. Processeur vidéographique selon la revendication 12, dans lequel la valeur Z en mémoire tampon représentative pour le bloc de pixels correspondant est une valeur Z correspondant à un bloc de pixels le plus en arrière dans un ensemble rectangulaire de blocs de pixels déterminé par des sommets de la primitive.

15. Processeur vidéographique selon la revendication 12, dans lequel la valeur Z en mémoire tampon représentative pour le bloc de pixels correspondant est une valeur Z correspondant à un bloc de pixels le plus en arrière dans un ensemble de blocs de pixels qui comprend des blocs de pixels qui comprennent des pixels auxquels correspond la primitive.

16. Processeur vidéographique selon la revendication 12, dans lequel la valeur Z en mémoire tampon représentative pour le bloc de pixels correspondant est une valeur Z la plus en arrière pour le bloc de pixels correspondant.

17. Processeur vidéographique selon la revendication 12, dans lequel la valeur Z représentative pour chaque partie est une valeur Z la plus en avant pour la primitive qui comprend la partie.

18. Processeur vidéographique selon la revendication 12, dans lequel la valeur Z représentative pour chaque partie est une valeur Z la plus en avant pour la partie, calculée en se basant sur au moins une partie des paramètres de primitives pour la primitive qui comprend la partie.

19. Produit programme informatique comprenant un code de programme stocké en mémoire (154) et lorsqu'il est exécuté sur un module de traitement (152), permet au module de traitement (152) de réaliser les étapes suivantes consistant à :
séparer (502) chaque primitive (70) en une pluralité de parties, où chaque partie de la pluralité de parties correspond à un bloc de pixels d'une pluralité de blocs de pixels, où chaque bloc de pixels de la pluralité de blocs de pixels comprend une partie d'un ensemble de pixels qui constitue la trame ;
déterminer (504) une valeur Z représentative pour chaque partie de la primitive (70) ;
comparer (506) la valeur Z représentative pour chaque partie avec une valeur Z en mémoire tampon représentative correspondant à la partie, où la valeur Z en mémoire tampon représentative est récupérée d'une mémoire de masque Z (26) ;
lorsque la valeur Z représentative pour la partie se compare favorablement à la valeur Z en mémoire tampon représentative, abandonner (510) la partie ; et
lorsque la valeur Z représentative pour la partie se compare de manière non favorable à la valeur Z en mémoire tampon représentative, traiter (512) la partie de la primitive.

20. Produit programme informatique selon la revendication 19, dans lequel la mémoire (154) comprend des instructions d'exploitation de telle sorte que le module de traitement (152) détermine la valeur Z représentative pour chaque partie de la primitive en utilisant une valeur Z la plus en avant de la primitive comme valeur Z représentative pour toutes les parties de la primitive.

21. Produit programme informatique selon la revendication 19, dans lequel la mémoire (154) comprend des instructions d'exploitation de telle sorte que le module de traitement détermine la valeur Z représentative pour chaque partie de la primitive en calculant une valeur Z la plus en avant pour chaque partie de la primitive.

22. Produit programme informatique selon la revendication 19, dans lequel la mémoire de masque Z stocke la valeur Z en mémoire tampon représentative pour chaque bloc de pixels de la trame et stocke également un niveau de compression correspondant à des informations Z pour chaque bloc de pixels.

23. Produit programme informatique selon la revendication 22, dans lequel la mémoire (154) comprend des instructions d'exploitation de telle sorte que le module de traitement (152) traite la partie de la primitive de telle sorte que le traitement comprend :
la génération de fragments de pixels pour la partie de la primitive ;
le mélange des fragments de pixels avec des données stockées pour un bloc de pixels auquel correspond la partie de la primitive, où le mélange produit des informations de valeur Z pour le bloc de pixels ;
la compression des informations de valeur Z de telle sorte qu'une nouvelle valeur Z en mémoire tampon représentative et un nouveau niveau de compression pour le bloc de pixels soient déterminés ; et
le stockage de la nouvelle valeur Z en mémoire tampon représentative et du nouveau niveau de compression dans la mémoire de masque Z.

24. Produit programme informatique selon la revendication 19, dans lequel la valeur Z en mémoire tampon représentative est une valeur Z correspondant à un bloc de pixels le plus en arrière dans un ensemble rectangulaire de blocs de pixels déterminé par des sommets (76) de la primitive (70).

25. Produit programme informatique selon la revendication 19, dans lequel la valeur Z en mémoire tampon représentative est une valeur Z correspondant à un bloc de pixels le plus en arrière dans un ensemble de blocs de pixels qui comprend des blocs de pixels qui comprennent des pixels auxquels correspond la primitive.

26. Produit programme informatique selon la revendication 19, dans lequel la valeur Z en mémoire tampon représentative est une valeur Z la plus en arrière dans un bloc de pixels qui correspond à la partie.
